Europäisches Patentamt

European Patent Office

Office européen des brevets

(19)

(11) Publication number: **0 082 645**
**B1**

(12) **EUROPEAN PATENT SPECIFICATION**

(45) Date of publication of patent specification: **22.01.86**

(21) Application number: **82306595.8**

(22) Date of filing: **10.12.82**

(51) Int. Cl.⁴: **G 11 B 21/10, G 11 B 5/58**

(54) Improvements in and relating to servo-track position detection systems.

(30) Priority: **22.12.81 GB 8138635**

(43) Date of publication of application:
**29.06.83 Bulletin 83/26**

(45) Publication of the grant of the patent:
**22.01.86 Bulletin 86/04**

(84) Designated Contracting States:
**BE DE FR IT NL**

(56) References cited:
**FR-A-2 126 698**
**GB-A-2 054 214**
**US-A-3 534 344**
**US-A-3 593 333**

**IBM TECHNICAL DISCLOSURE BULLETIN, vol.
18, no. 8, January 1976, pages 2656-2657, New
York (USA); A.J. BETTS: "Null servo pattern".**

(73) Proprietor: **BURROUGHS CORPORATION (a
Michigan corporation)
Burroughs Place
Detroit, Michigan 48232 (US)**

(72) Inventor: **Sellars, Graham Paul
5 Forest Road
Over, Winsford Cheshire (GB)**

(74) Representative: **Kirby, Harold Douglas Benson
et al
G.F. Redfern & Company Marlborough Lodge 14
Farncombe Road
Worthing West Sussex BN11 2BT (GB)**

EP 0 082 645 B1

Courier Press, Leamington Spa, England.

## Description

The present invention relates to systems for detecting the positions of benchmarks on a recording medium. It particularly relates to systems where the direction and magnitude of the displacement of a transducer from being centrally disposed over a servo track recorded on a moving medium is indicated by the output of a decoder in receipt of signals recovered from the servo track by the transducer. Most particularly it relates to such systems where the medium is magnetic tape or disc for the recording of informational data signals.

It is well known in the field of magnetic data recording on moving tape or rotating disc, and latterly in the field of video recording and optical data recording on disc, to employ one or more servo tracks on the tape or disc to act on benchmarks so that signal recovering or recording transducers can be located over the medium in positions measured relatively to the servo track to accurately locate other data signals. It is usual to employ a decoder in receipt of signals recovered from the medium by the transducer, the decoder providing an output signal indicative of the sense and magnitude of displacement of the servo-signal recovering transducer from being centrally disposed over the servo track. The output of the decoder can then be variously used to give indication of the position of the servo track relatively to an external position measuring system to a controller for the controller to use that information to locate the transducer over other, data storage tracks by interpolation or extrapolation, or directly as a position feedback signal in a transducer-positioning servo mechanism to centre the transducer over the servo track.

There are many different types of servo tracks sharing the common factor of consisting in two associated sub-tracks. Signal attributes from the sub-tracks are picked up in common by the transducer, separated and compared to indicate the position of the transducer relative to central disposition over the track, central disposition being indicated by equality of the attributes. The so-called dibit system and the so-called tribit system are characteristic of this class.

United Kingdom Patent Application 2,054,214A, (inventor Bacrania) and French Patent 2,126,698, (inventor Mueller), shows variants on the so-called tribit system where a servo track is divided into two sub-tracks for generating a first timing pulse by the summation of pulses from each of the two sub-tracks followed by two position indicating pulses, each independently indicative of the extent of interaction of a reading transducer with each sub-track in the servo track. United States Patent 3,534,344, (inventor Santana), shows one form of the so-called "dibit" servo system where the servo track is again divided into sub-tracks, the sub-tracks being recorded with adjacent flux reversal pairs to induce pairs of pulses in a reading transducer, the amplitude of each pulse in the pair being proportional to the extent of interaction of the transducer with the sub-track. The transducer is deemed in the dibit case to be central over the track when the amplitudes of sequential sets of pairs of pulses detected by the transducer are equal. In the tribit case, the transducer is deemed to be central over the servo track when a decoder detects that the difference in amplitudes of the first position indicating pulse from a first sub-track and the later, staggered second position indication pulse from the second sub-track are equal. The present invention seeks to provide improvement over both of these systems by arranging that the position indicating pulses of the individual sub-tracks are summed directly to the transducer itself and not in any external circuitry, and by simplifying timing requirements in the decoder to eliminate any decoder-generated imbalances, and to guarantee correct synchronisation.

In the case of both the dibit and tribit systems the decoder measures the amplitudes of position-indicating pulses and subtracts one measurement from the other to provide an output indication by magnitude and sense of the size and direction of the displacement of the transducer from being centrally disposed over a median line between two contiguous sub-tracks. The pulse amplitude measuring process and the amplitude comparison process are both subject to errors due to the relatively large number of components required for their execution by the decoder and the statistical variation in component values.

In both the so-called dibit system and so-called tribit system the linear density of servo signals must be kept low so that successive pulses in the dibit or tribit patterns as recovered by the transducer are far apart from one another compared to the widths of the pulses, so that the pulses do not unduly interfere with one another to disturb their relative values.

It is the trend that an increasing number of data storage tracks are required in closer proximity to one another on the medium, be it disc or tape, magnetic or optical, and in such high track density situations, the output errors produced by a conventional decoder as a result of its multiplicity of components and operations can render the subsequent positioning of a transducer insufficiently accurate for the proper recording and/or recovery of signals.

It is also the trend that servo information is coming to be recorded interspersed linearly among data signals on common tracks, the decoder being made operational only when servo signals are being recovered by the transducer, thus allowing the transducer to be precisely positioned over the common tracks. In such situations it is deleterious to the data storage capacity of the common tracks to employ a servo system wherein position-indicating pulses must be well separated from one another, as this eats into the part of the common tracks potentially usable for informational data.

Conventional servo signal decoders, because of the high component count and varied operations are required to employ high precision individual components and/or components adjustable during manufacture in order to reduce the many possible sources of error. This causes the conventional servo signal decoder to be high in cost.

In an article in the IBM Technical Disclosure Bulletin, Vol. 18, No. 8 of January 1976, A. J. Betts in an article entitled "Null Servo Pattern" discloses a servo pattern magnetically recorded on a disc file for detecting the displacement of a head from central disposition over a servo track. In a first portion (FIELD 1) a synchronising signal is first provided where the whole width of the track is recorded first in one magnetic sense and then in another with a known periodicity in order to allow the reconstruction of a clock decoding signal therefrom. After the synchronising portion of the servo pattern, the track is split into first and second sub-tracks (in FIELD 2) where each sub-track is recorded with reversing magnetic polarity having the same periodicity as in the synchronising portion (FIELD 1), but where the magnetic polarity in each corresponding portion of each sub-track is the reverse of that in the other sub-track. Thus, each magnetic flux direction reversal in each sub-track induces a pulse in a transducer of a polarity determined by the sense of the flux change direction and of a magnitude proportional to the amount of interaction of the transducer with the particular sub-track. Since each sub-track is in phase opposition with the other, if the head is precisely over the centre of the servo track the two pulses cancel to give a nil residual pulse. As the transducer is placed more over one sub-track than the other, so a pulse of appropriate polarity proportional to the difference between the amounts of interaction of the transducer with each sub-track is produced. The decoding clock derived from the synchronising portion (FIELD 1) of the servo pattern is used to sample the residual pulses to give an output indicative by sense and magnitude of the direction and distance of the transducer from being centrally interactive with the servo track. The present invention seeks to improve thereover by providing a servo track system wherein an extended synchronising portion to a servo pattern is not required and wherein there is no requirement for regeneration of a clock signal using any form of phase-locked oscillator.

It is therefore desirable to provide a servo track position detection system for detecting the position of a transducer relatively to central disposition over a servo track from which it is recovering signals wherein the individual pulses of the servo signal can be recorded in close proximity to one another and wherein the decoder is of simple construction with a low component count and relatively few operations.

The present invention consists in a servo track position detection system comprising; a servo track on a moving medium having a repeated plurality of servo patterns recorded thereon; a transducer positionable to interact with said servo track to recover signals therefrom; and a decoder coupled to receive and operable to decode said signals from said transducer to provide output indicative of the direction and distance of deviation of said transducer from being over the centre of said servo track; said servo track comprising first and second parallel sub-tracks; and each of said servo patterns consisting in, first and second recorded components on said first sub-track and third and fourth recorded components on said second sub-track, said transducer being operable simultaneously to recover the sum from said servo track first and third pulses of opposite polarities induced respectively by said first and said third recorded components to provide a first residual pulse and said transducer being further operable simultaneously to recover and sum from said servo track second and fourth pulses of opposite polarities induced respectively by said second and said fourth recorded components to provide a second residual pulse, said first residual pulse being in advance of said second residual pulse by a first predetermined period; said decoder comprising a detector for detecting said first residual pulse to initiate operation of a timing element to delay for said first predetermined period from detection of said first residual pulse to sample one or other of said first or said second residual pulse, said system being characterised by the delay between said second residual pulse in a first servo pattern and the first residual pulse in the next following servo pattern being a second predetermined period greater than said first predetermined period, and by said decoder sampling said one or said other of said first or said second residual pulses to provide an output indicative by polarity and magnitude of the direction and distance of displacement of said transducer from a position over said centre of said servo track if said first residual pulse initiates said operation of said timing element, but said decoder providing no output if said operation of said timing element is initiated by said second residual pulse.

In a preferred embodiment a servo track is recorded on a moving medium. The medium is preferably magnetic. The magnetic medium is preferably a disc for digital, informational data recording. The servo track preferably comprises a first sub-track and a second sub-track. The first and second sub-tracks are preferably recorded contiguously along a median line. The sub-tracks are preferably equal in width or wider than a transducer for recovering signals from the medium. The first and second sub-tracks each preferably comprise areas of a first polarity of magnetisation and areas of a second polarity of magnetisation. The boundaries between the areas of first and second polarities of magnetisation are preferably rectilinear and at right angles to the median line in each sub-track. The first sub-track preferably comprises a first boundary being a transition from the first polarity of polarisation of magnetisation to the second, and thereafter a second boundary being a transition of magnetic polarisation from the second to the first polarity. The second sub-track preferably comprises a third boundary being a transition from magnetisation of the second polarity to magnetisation of the first polarity, and a fourth boundary being a transistion from the magnetic polarisation of the first polarity to polarisation of the second polarity. The second boundary in the first sub-track is preferably aligned with the fourth boundary of the second sub-track.

In a first preferred embodiment of the servo track the first boundary of the first sub-track is preferably aligned with the third boundary of the second sub-track. The transducer preferably responds to the difference in the change of magnetic flux encountered as the alignment of the third and first boundaries passes therebeneath to provide a first residual pulse whose amplitude is proportional to the relative difference between the amounts of said first and second sub-tracks interacting with the transducer. The transducer preferably responds to the change in magnetic flux encountered as the alignment of the fourth and second boundaries passes therebeneath to provide a second residual pulse whose amplitude and sense is proportional to the relative difference between the amounts of said first and second sub-tracks interacting with the transducer.

In a first preferred decoder for use with the first preferred embodiment of the servo track a composite peak detector is operable to detect the first residual pulse and in response thereto to operate a timer. The timer preferably opens an analog gate during the period of receipt of the second residual pulse. The output of the analog gate is preferably provided as the input to a smoothing circuit. The smoothing circuit is preferably a low pass filter. The input to the analog gate is preferably the signal recovered by the transducer from the servo track. The output of the low pass filter is preferably provided as the output of the decoder. The timer is preferably non-retriggerable during its time operation and has a period less than the time between successive first residual pulses. The composite peak detector preferably comprises a positive peak detector, a negative peak detector, and an "OR" gate for combining the logical pulse outputs of the two.

In a second preferred embodiment of the decoder for use with the first embodiment of the servo track the signal recovered from the servo track by the transducer is coupled as the rectified input to a multiplier. The signal from the transducer is preferably supplied as the input to a delay circuit. The delay circuit preferably delays the transducer output signal by a time equal to the interval between a first residual pulse and a second residual pulse. The output of the delay circuit is preferably provided as the second input to the multiplier. The output of the multiplier is preferably the analog multiple of its two inputs and is coupled via a low pass filter as the output of the decoder.

In a second preferred embodiment of the servo track all is as in the first preferred embodiment of the servo track save that the first and third boundaries in the first and second sub-tracks respectively are not aligned so that the first residual pulse is lost and becomes first and second timing pulses whose amplitudes are substantially independent of the position of the transducer relative to the median line.

In both the first and second preferred embodiments of the servo track the distance from the first to the second boundaries is less than the distance between the second boundary and any subsequent first boundary and the distance between the third boundary and the fourth boundary is less than the distance between the fourth boundary and any subsequent third boundary.

In a third preferred embodiment of the decoder for use with the second preferred embodiment of the servo track, all is as in the first preferred embodiment of the decoder save that the composite peak detector is replaced with a dual peak detector for detecting the first and/or second timing pulses.

The invention is further explained, by way of example, by the following description in conjunction with the appended drawings, in which:

Figure 1 shows a servo track of the first preferred kind.

Figures 2A 2B and 2C show a transducer in different positions on the servo track of Figure 1

Figures 3A 3B and 3C show the signals recovered by the transducer from the servo track when in each of the positions indicated in Figures 2A 2B and 2C respectively.

Figure 4 shows the first preferred embodiment of the decoder.

Figure 5 shows the second preferred embodiment of the decoder.

Figure 6 shows the second preferred embodiment of the servo track.

Figure 7 shows a signal recovered from the servo track of Figure 6 by the transducer.

Figure 8 shows the third preferred embodiment of the decoder.

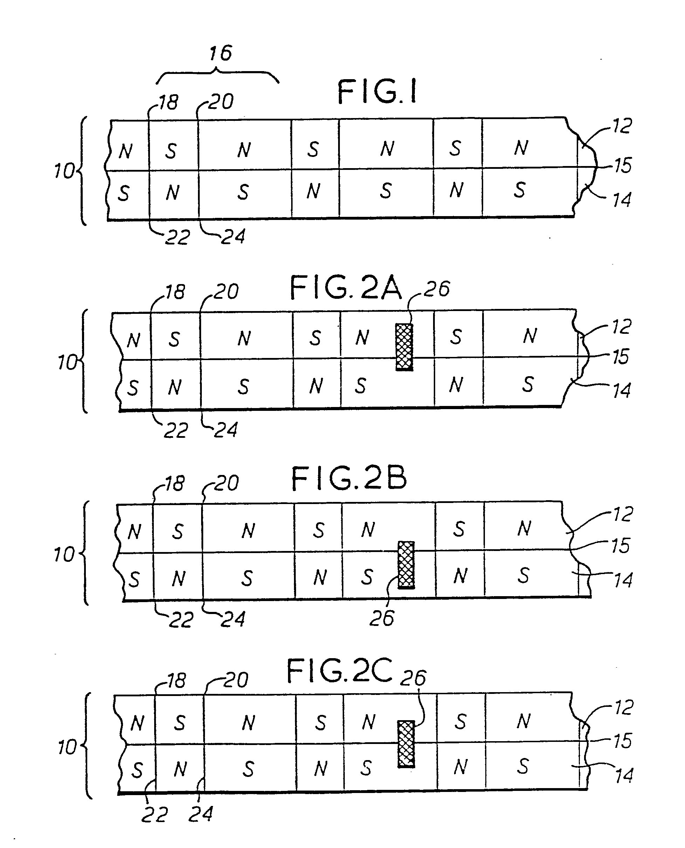

Figure 1 shows the servo track in its first preferred embodiment.

The servo track 10 comprises a first sub-track 12 and a second sub-track 14 contiguously recorded along a median line 15. Both sub-tracks 12, 14 comprise areas of a first polarity of magnetisation N alternating with areas of a second polarity of magnetisation S, the servo track 10 being recorded on a magnetic informational data storage rotary disc. The boundaries between the first areas N and the second areas S are everywhere at right angles to median line 15.

The areas N, S alternate along the length of the servo track 10 to form a repetitious plurality of servo patterns 16. In the first sub-track the pattern 16 comprises a first boundary 18 between a first area N and a second area S and a second boundary 20 between a second area S and a first area N. In the second sub-track the pattern 16 comprises a third boundary 22 between a second area S and a first area N and a fourth boundary 24 between a first area N and a second area S. The first boundary 18 is co-incident with the third boundary 22 along the length of the track 10 with a magnetisation change of opposite sense and the second boundary 20 is similarly co-incident and similarly opposite in sense with the fourth boundary. The distance between the first boundary 18 and the second boundary 20 is less than the distance between the second boundary 20 and the subsequent first boundary 18 in a pattern. Because of the coincidence of the first and third boundaries 18, 22 and of the second and fourth boundaries 20, 24 the same relationship holds in linear spacing for the third to the fourth boundaries 22, 24 as holds for the first to the second boundaries 18, 20 respectively.

It is to be appreciated that whereas the servo track 10 is here depicted as comprising a repetitive plurality of patterns the description equally applies where the servo track 10 comprises just a single pattern 16 as might be encountered when servo information is laid down among other signals on a common track.

Figure 2A shows a magnetic head 26 disposed over the servo track 10 such that it is more interactive with the first sub-track 12 than with the second 14. The boundaries 18, 20, 22, 24 each cause an output pulse in the head 26 whose amplitude is proportional to the relative extend of the width of the head 26 over which the boundary 18, 20, 22, 24 extends and whose polarity is dependent upon the sense of the change of polarisation of magnetisation N, S of the boundary 18, 20, 22, 24. Thus the first and second boundaries 18, 20 will produce greater output than the third and fourth boundaries 22, 24.

Figure 2B shows the head 26 disposed more over the second sub-track 14 than over the first sub-track 12. In this instance the third and fourth boundaries 22, 24 produce greater output from the head 26 than do the first and second boundaries 18, 20.

Figure 2C shows the head 26 equally disposed over both sub-tracks 12, 14 so that the first and second boundaries 18, 20 produce the same output amplitudes as do the third and fourth boundaries 22, 24.

It is to be appreciated that the head 26 is representative of the area of interaction of any kind of transducer on any recording medium. In the case of the preferred embodiment, the head is magnetic and the representation 26 thereof indicates the flux-intercepting gap of such a head. In other circumstances the representation 26 can be taken as indicating a laser reader for optical discs and the like.

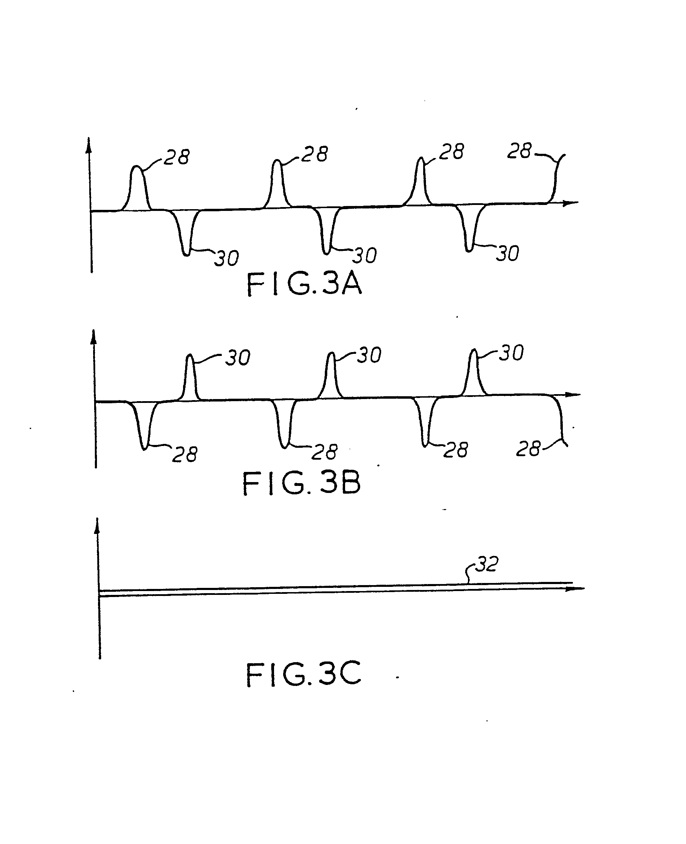

Figure 3A shows the output waveform recovered from the track 10 by the head 26 when in the position indicated in Figure 2A.

It is assumed in the following description that the head 26 is static and the track 10 moves towards the left of Figures 2A to 2C with uniform velocity. This can be achieved when the track 10 is on moving tape by movement of the tape in the conventional manner. When the track 10 is recorded on a disc the movement of the track 10 is achieved by rotation of the disc, in which circumstance the track 10 as depicted in Figures 2A to 2C is in fact a portion of a circular track 10 extending right round the disc at a predetermined radius relative to the centre of rotation.

It is also assumed in the following description that whenever a boundary which is a change from magnetic polarisation of the first kind N to magnetic polarisation of the second kind S passes beneath the head 26 it induces in the head a pulse with positive polarity and whenever a boundary which is a change from magnetic polarisation of the second kind S to magnetic polarisation of the first kind N passes beneath the head 26 it induces in the head a pulse with negative polarity.

It will be apparent from the following descriptions how the embodiments of the invention can be altered to accommodate non-uniform track 10 velocity. It will also be apparent how the invention can be modified in its embodiments to allow for responses of opposite polarity from the head 26. It will further be appreciated that where the representation of the head 26 is taken as being indicative of some other kind of transducer other than a flux-change sensitive head, the output thereof can readily be converted to the pulse form as described by the application of well-known techniques.

The first and third boundaries 18, 22 pass beneath the head 26 simultaneously. The first boundary 18 being from the first sense of magnetisation N to the second S induces a positive pulse response in the head 26 and the third boundary being from the second sense of magnetisation S to the first N induces a negative pulse response in the head 26. The head 26 is more over the first boundary 18 than over the third boundary 22, the amplitude of the response from the first boundary 18 therefore being greater than the amplitude of the response from the third boundary 22. The responses from the first and third boundaries 18, 22 partially cancel to leave a first residual pulse 28 which is predominantly positive.

In just the same way the second and fourth boundaries 20, 24 pass beneath the head 26 simultaneously the second boundary 20 inducing a negative pulse response in the head 26 and the fourth boundary 24 inducing a positive pulse response in the head 26. The response from the second boundary 20 has a greater size than the response from the fourth boundary 24 because of the position of the head 26. The two responses cancel in part to leave a second residual pulse 30 of the same size by opposite polarity to the first residual pulse 28.

Figure 3B shows the output waveform of the head 26 when in the position depicted in Figure 2B.

The head 26 is more over the second sub-track 14 than over the first 12 so that the amplitude of the response induced in the head 26 by the third boundary 22 is greater than the amplitude of the response induced in the head by the first boundary 18 and the amplitude of the response induced in the head 26 by the fourth boundary 24 is greater than the amplitude of the response induced in the head 26 by the second boundary 20.

As a result of pulse cancellation, the first residual pulse 28 is therefore negative and the second residual pulse 30 is positive and of the same size.

Figure 3C shows the output waveform of the head 26 when in the position depicted in Figure 2C.

The head 26 is equally over both sub-tracks 12, 14 and the first boundary 18 induces an equal and opposite response to the negative response induced in the head 26 by the third boundary 22. Similarly the second boundary 20 induces a negative pulse response in the head 26 which is equal and opposite to the positive pulse response induced in the head 26 by the fourth boundary. The responses each being equal and opposite to their respective opposed response, the output of the head 26 reduces to the zero line 32, the amplitude of the first and second residual pulses 28, 30 having been reduced to nothing by cancellation.

It is to be appreciated that the situations as depicted in Figures 3A to 3C are representative of continuous variation as the head 26 moves from disposition over one sub-track to disposition over the other 12, 14. The first residual pulse 28 reaches maximum positive value and the second residual pulse 30 reaches maximum negative value when the head 26 is entirely over the first sub-track 12. Similarly, the first residual pulse 28 reaches maximum negative value and the second residual pulse 30 reaches maximum positive value when the head 26 is entirely over the second sub-track 14. The amplitudes of the first and second residual pulses 28, 30 increase together linearly with the magnitude of displacement of the head 26 from being central over the medial line 15 and have a polarity which depends upon the direction from the median line 15 in which the head 26 is displaced.

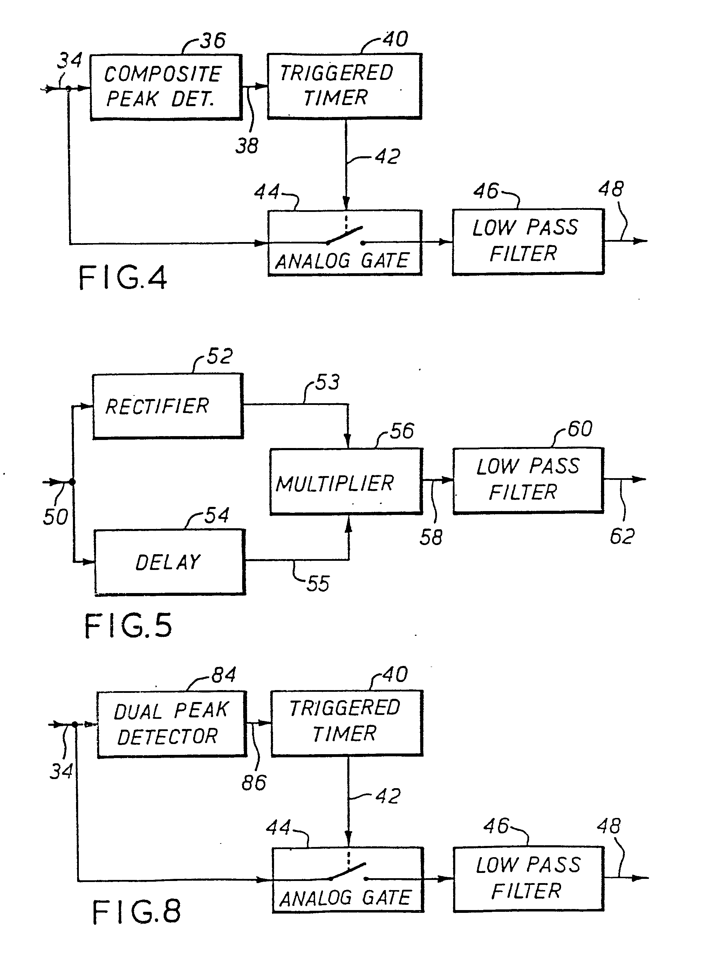

Figure 4 shows a first preferred embodiment of the decoder for use with servo track 10 of Figure 1.

The signal recovered by the head 26 from the track 10, having been suitably amplified and filtered as is the well known practice with such signals, is supplied via a signal input line 34 as the input to a composite peak detector 36. The composite peak detector 36 responds to the first residual pulse 28 to provide a trigger pulse on a trigger line 38.

The composite peak detector 36 can be of any kind known in the art for detecting such pulses, for example comprising a positive peak detector and a negative peak detector each in receipt of the input line 34 and operable in response to the provision thereon of a positive first residual pulse 28 or a negative first residual pulse 30 respectively to provide a logic output, the logic outputs of the first and second peak detectors being provided as the inputs to an "OR" gate, or being "Wire OR'ed" together to provide logically one output or the other as the signal on the trigger line 38. The positive and negative peak detectors are required to respond to pulses of very small amplitude such as are encountered when the head 26 is close to central position over the servo track 10. The point at which pulses 28 cease to be detected by the detector 36 can be chosen by appropriate selection of the type of peak detectors employed and by manipulation of their parameters to lie as close to central position of the head 26 over the track 10 as is desired.

The signal on the trigger line 38 is used as the triggering input for a timer 40. On receipt of the triggering pulse from the detector 36, the timer starts an operation which consists in waiting for a first predetermined time until just before the arrival of the second residual pulse 30, then supplying a window signal on a window line 42 until a little after the arrival of the second residual pulse 30. The timing may variously be performed with counters, monostable timers and the like and it will be readily apparent to those skilled in the art how such a timer can be constructed. The timer 40, once started is not retriggerable by subsequent pulses on the trigger line 38. Thus, should the detector 36 provide an output in response to the second residual pulse 30 the additional response of the detector 36 does not affect the operation of the timer. Those skilled in the art will be able to imagine schemes whereby feed-back can be provided from the timer 40 to the detector 36 to inhibit its operation during the operation of the timer.

The duration of the operation of the timer 40 is such that it is completed before the arrival of any subsequent first residual pulse 28 subsequently to having been triggered (erroneously) by a second residual pulse 30. In this way it is impossible for the timer 40 to become locked onto the wrong residual pulse 30 stream. At very worst the timer will mis-operate for only one pattern 16. It will be apparent how the spacing between the first and second residual pulses 28, 30 and between the second and first residual pulses 30, 28 should be arranged to accomplish this end.

The window signal on the window line 42 is provided as the controlling input to an analog gate 44. The signal from the servo track 10 picked up by the head 26 is supplied via the input line 34 as the analog input to the gate 44. Whenever the window signal is provided on the window line 42 the gate 44 opens to provide as output the analog signal provided·on its analog input. Since the window signal is provided by the timer 40 only when the second residual pulse 30 arrives, the output of the gate 44 consists entirely in a serial stream of successive second residual pulses 30. The mean level of the second residual pulses 30 is indicative by magnitude of the size of the displacement of the head 26 from central disposition over the track 10 and indicative by polarity of the direction of that displacement.

The output of the analog gate 44 is provided as the input to a low pass filter 46 whose output, provided on the decoder output line 48, is the mean of its input.

The decoder as described thus has only one pulse height measuring channel with very few components so avoiding the errors induced by component tolerances in those decoders where first and second measuring channels measure pulse height and provide representative signals to a comparator. In effect, in the present system, the comparison of pulse heights occurs by flux summing in the head 26.

Figure 5 shows a second preferred embodiment of the decoder for use with the servo track 10 of Figure 1.

The amplified and filtered signal recovered by the head 26 from the track 10 is supplied via a signal line 50 as the input to a rectifier 52. The rectifier 52 always provides a positive representation of its input signal regardlessly of its actual input signal polarity. The rectifier 52 can be any one of a number of circuits and those skilled in the art will be aware of methods for the implementation thereof using transistor circuits, bridge rectifiers, amplifier feedback circuits and the like. The output of the rectifer 52 is provided on a rectifier output line 53 as the first input to an analog multiplier 56.

The signal input line 50 also provides the input to a delay 54 whose output is a delayed representation of input having the same polarity as its input and retarded by an amount of time equal to the period between the first residual pulse 28 and the second residual pulse 30. The delay 54 is any type of analog delay ranging from a conventional inductor-capacitor delay line to a charge coupled bucket brigade device, dependently upon the speed required. The output of the delay 54 is coupled via a delay output line 55 as the second input to the analog multipler 56.

The multipler 56 responds to its first and second inputs to provide an output signal which is representative of the product of the instantaneous value of the signal on the rectifier output line 53 and of the instantaneous value of the signal on the delay output line 55.

It is arranged that the period between the first residual pulse 28 and the second residual pulse 30 is less than the period between the second residual pulse 30 and the subsequent first residual pulse 28. In this way, when the rectified second residual pulse 30 is arriving as the first input to the multipler 56 the delayed first residual pulse 28 is arriving on the second input to the multipler 56 and the multipler 56 provides an output representative of the product therebetween. However, when the second residual pulse 30 is arriving via the delay 54 as the second input to the multiplier 56 the first input to the multiplier 56 via the rectifier 52 is providing no signal and the output of the multiplier 56 is accordingly zero. The multiplier 56 therefore provides a succession of output pulses on a multiplier output line 58 being the first residual pulse 28 multiplied by the sampling function of the rectified second residual pulse 30. The output pulses of the rectifier are therefore representative of the sense of the first residual pulse 28 and of the magnitude of the product of the magnitudes of the first and second residual pulses 28, 30. The output pulses from the multiplier 56 are smoothed and averaged by a lowpass filter 60 as before.

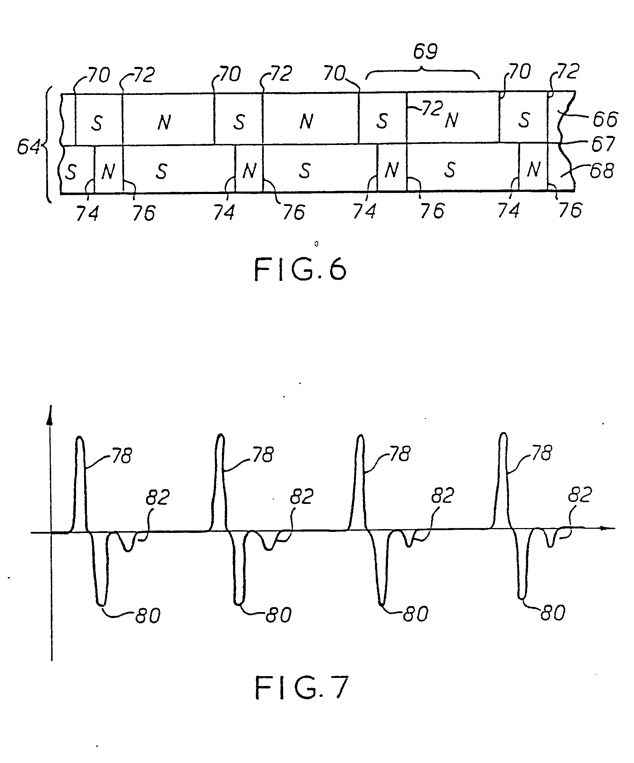

Figure 6 shows a second preferred embodiment of the servo track.

In the second preferred embodiment of the servo track 64 everything is as in the first preferred embodiment 10 of the servo track. The second preferred track 64 comprises first and second sub-tracks 66, 68 contiguous along a median line 67 and corresponding to the first and second sub-tracks 12, 14 and median line 15 of Figure 1. A servo pattern 69 is optionally repeated along the length of the track 64 just as the pattern 16 in the first preferred track 10 is optionally repeated. First, second third and fourth boundaries 70, 72, 74, 76 correspond to the first second third and fourth boundaries 18, 20, 22, 24 of the first preferred embodiment of the track 10. The only difference between the second preferred track 64 and the first preferred track is that in the second preferred track 64 the first boundary 70 is not aligned with the third boundary 74 so that the pulse responses they induce in the head 26 are no longer co-incident in and do not cancel.

Figure 7 shows the signal recovered by the head 26 from the second preferred track 64.

The first boundary 70 induces a first, positive timing pulse 78 in the head 26. The third boundary 74 induces a second, negative timing pulse 80 in the head 26. The opposition of the second boundary 72 and the fourth boundary 76 as they pass beneath the head 26 cause a position indicating residual pulse 82 whose sense is indicative of the direction of the displacement of the head 26 from central disposition over the track 64 and whose amplitude is indicative of the size of that displacement. The signal is here shown as if the head 26 is disposed more over the first sub-track 66 than over the second sub-track 68.

The first timing pulse 78 is always positive and the second timing pulse 80 is always negative. When the head 26 is entirely over the first sub-track 66 the first timing pulse 78 is at a maximum value and the second timing pulse 80 is at zero value. When the head 26 is entirely over the second sub-track 68 the first timing pulse 78 has zero amplitude and the second timing pulse 80 has maximum amplitude. At intermediate points the first and second timing pulses 78, 80 have intermediate values and their amplitudes always add up to the maximum value, their particular values being determined by the proportional part of the width of the head 26 over each sub-track 66, 68.

Figure 8 shows a decoder suitable for use with second preferred embodiment of the servo track 64.

All things are as in the first preferred decoder as illustrated in Figure 4, save that the composite peak detector 36 is replaced by a dual peak detector 84 providing an output on a dual peak detector line 86 to the triggered timer 40.

The dual peak detector detects the passage of the first and second timing pulses 78, 80. In its simplest form it can consist of two peak detectors and an "OR" gate just like the composite peak detector 36, with the difference that in the dual peak detector 84 there is no need to detect small amplitude pulses since one or other of the first and second timing pulses 78, 80 will always be of large amplitude. The first predetermined period of the timer 40 should then be chosen such that it is immaterial to the operation of the window whether the first or second timing pulses 78, 80 triggers the timer 40. In a more complicated form the dual peak detector 84 can consist in a zero crossing detector which provides an output pulse if and only if its input voltage passes from positive to negative with more than a predetermined negative slope thereon.

In the decoder shown in Figure 8 the sum of the amplitudes of the first and second timing pulses 78, 80 can be exploited as a method for controlling the scaling factor of the amplitude of the residual pulse 82 by detecting and adding the sums of their 78, 80 amplitudes and subtracting that sum from a predetermined level for use as the gain controlling signal in a gain controlled amplifier.

**Claims**

1. A servo track position detection system comprising; a servo track (10, 64) on a moving medium having a repeated plurality of servo patterns (18, 20, 22, 24 or 70, 72, 74, 76) recorded thereon; a transducer (26) positionable to interact with said servo track (10, 64) to recover signals (28, 30 or 78, 80, 82) therefrom; and a decoder (36, 40, 44, 46 or 52, 54, 56, 60 or 84, 40, 44, 46) coupled to receive and operable to decode said signals (28, 30 or 78, 80, 82) from said transducer (26) to provide output indicative of the direction and distance of deviation of said transducer (26) from being over the centre (15, 67) of said servo track (10, 64); said servo track (10, 64) comprising first (12, 66) and second (14, 68) parallel sub-tracks; and each of said servo patterns (18, 20, 22, 24 or 70, 72, 74, 76) consisting in, first (18, 70) and second (20, 72) recorded components on said first sub-track (12, 66) and third (22, 74) and fourth (24, 76) recorded components on said second sub-track (14, 68), said transducer (26) being operable simultaneously to recover and sum from said servo track (10, 64) first (78) and third (80) pulses of opposite polarities induced respectively by said first (18, 70) and said third (22, 74) recorded components to provide a first residual pulse (28 or 78, 80) and said transducer (26) being further operable simultaneously to recover and sum from said servo track (10, 64) second and fourth pulses of opposite polarities induced respectively by said second (20, 72) and said fourth (24, 76) recorded components to provide a second residual pulse (30, 82), said first residual pulse (28 or 78, 80) being in advance of said second residual pulse (30, 82) by a first predetermined period; said decoder (36, 40, 44, 46 or 52, 54, 56, 60 or 84, 40, 44, 46) comprising a detector (36, 52, 84) for detecting said first residual pulse (28 or 78, 80) to initiate operation of a timing element (40, 54) to delay for said first predetermined period from detection of said first residual pulse (28 or 78, 80) to sample (in 44, 46 or in 56, 60) one or other of said first (28 or 78, 80) or said second (30, 82) residual pulse (30, 82) said system being characterized by the delay between said second residual pulse (30, 82) in a first servo pattern and the first residual pulse (28 or 78, 80) in the next following servo pattern (18, 20, 22, 24 or 70, 72, 74, 76) being a second predetermined period greater than said first predetermined period, and by said decoder (36, 40, 44, 46 or 52, 54, 56, 60 or 84, 40, 44, 46) sampling said one or said other of said first (28 or 78, 80) or said second (30, 82) residual pulses to provide an output (48, 62) indicative by polarity and magnitude of the direction and distance of displacement of said transducer from a position over said centre (15, 67) of said servo track (10, 64) if said first residual pulse (28 or 78, 80) initiates said operation of said timing element (40, 54), but said decoder (36, 40, 44, 46 or 52, 54, 56, 60 or 84, 40 44, 46) providing no output if said operation of said timing element (40, 54) is initiated by said second residual pulse (30, 82).

2. A system according to Claim 1, wherein said decoder (52, 54, 56, 60) comprises: a rectifier (52) coupled to receive (on 50) said first (28) and second (30) residual pulses from said transducer (26) and operable, to provide as an output (53), a unipolar representation thereof regardless of their actual polarity, wherein said timing element comprises a delay circuit (54), coupled to receive (on 50) said residual pulses (28, 30) from said transducer (26) and operable to provide, as an output (55), a representation thereof delayed by said first predetermined period, and wherein said decoder further comprises a multiplier (56), coupled to receive said output (53) of said rectifier (52) and to receive said output (55) of said delay circuit (54) and operable to provide an output signal (58) representative of the instant product thereof, said delay circuit (54) being operative to cause co-incident presentation of said output (52) from said rectifier (52) and said output of delay circuit (54) to said multiplier (56) when said first residual pulse (28) is followed by said second residual pulse (30) but not when said second residual pulse (30) is followed by a first residual pulse (28) from a subsequent servo pattern (18, 20, 22, 24).

3. A system according to Claim 1, wherein said decoder (36, 40, 44, 46) comprises a composite peak detector (36) coupled to receive (on 34) said residual pulses (28, 30) from said transducer (26) and operable in response to the receipt of a residual pulse (28, 30) above a predetermined amplitude to provide an output signal (38) indicative of the receipt thereof; wherein said timing element comprises a timer (40) coupled to receive said output (38) from said composite peak detector (36) and operable to be triggered thereby to start a timing operation consisting in waiting for a third predetermined period, and, immediately thereafter providing a window signal (42) for a fourth predetermined period, and wherein said decoder (36, 40, 44, 46) further comprises an analog gate (44), coupled to receive (on 34) said residual pulses (28, 30) from said transducer (26) as input and coupled to receive said window signal (42) as a control input, said analog gate (44) being operable in response to the receipt of said window signal (42) to provide as its output (to 46) a representation of its input (on 34) where, if said first residual pulse (28) causes said composite peak detector (36) to trigger said timer (40), said second residual pulse is presented as input (on 34) to said analog gate (44) during presentation thereto of said window signal (42), where said second predetermined period is greater than the sum of said third and fourth predetermined periods, and where said timer (40) is not retriggerable during said third and fourth predetermined periods; whereby, if said first residual pulse (28) causes said composite peak detector (36) to trigger said timer (40), said analog gate (44) samples said second residual pulse (30), but if said second residual pulse causes said composite peak detector (36) to trigger said timer (40), said first residual pulse (28) is not sampled by said analog gate (44) and said timer (40) is ever after triggered only by each successive instance of presentation of said first residual pulse (28) as input (34) to said composite peak detector (36).

4. A system according to Claim 1, 2 or 3 characterised by said moving medium comprising a rotary magnetic disc and by said transducer (26) comprising a magnetic read/write head.

5. A system according to Claim 1 modified in that said first (78) and third (80) pulses are not simultaneously induced in said transducer (26), said first (78) and third (80) pulses being separated instead by a fifth predetermined period sufficient to prevent mutual cancellation in whole or in part therebetween.

6. A system according to Claim 5, wherein said decoder (84, 40, 44, 42) comprises: a composite peak detector (84) coupled to receive (on 34) said pulses (78, 80, 82) from said transducer (26), operable to detect the one, the other or both of said first (78) and third (80) pulses (78, 80) and operable to provide an output (86) indicative thereof, wherein said timing element comprises a timer (40) coupled to receive said output (86) from said composite peak detector (84) and operable in response thereto to wait for a third predetermined period and then provide a gate signal (42) for a fourth predetermined period, and an analog gate signal (44) coupled to receive (on 34) said pulses (78, 80, 82) from said transducer (26), coupled to receive said gate signal (42) from said timer (40) as a control input and operable in response thereto (42) to allow the through-passage (from 34 to 46) of said residual pulse (82) to an output, said third predetermined period and said fourth predetermined period being such that said residual pulse and none other is allowed passage through said gate regardless of whether said composite peak detector detects said first pulse, said third pulse or both.

7. A system according to Claim 4, 5 or 6 wherein said moving medium is a rotary magnetic data storage disc, and wherein said transducer is a read/write head.

**Revendications**

1. Système de détection de position de piste d'asservissement comportant une piste d'asservissement (10, 64) sur un support mobile ayant un ensemble répété de schémas d'asservissement (18, 20, 22, 24 ou 70, 72, 74, 76) enregistrés sur celle-ci; un transducteur (26) susceptible d'être positionné pour coopérer avec la piste d'asservissement (10, 64) pour lire les signaux (28, 30 ou 78, 80, 82) sur celle-ci; un décodeur (36, 40, 44, 46 ou 52, 54, 56, 60 ou 84, 40, 44, 46) couplé de façon à recevoir et à coopérer pour décoder les signaux (28, 30, ou 78, 80, 82) du transducteur (26) pour fournir un signal de sortie indiquant la direction et la distance de déviation entre les transducteur (26) et le milieu (15, 67) de la piste d'asservissement (10, 64); cette piste d'asservissement (10, 64) se composant d'une première sous-piste (12, 66) et d'une seconde sous-piste (14, 68) parallèles; chacun des schémas d'asservissement (18, 20, 22, 24 ou 70, 72, 74, 76) comportant une première composante (18, 70) et une seconde composante (20, 72) enregistrées sur la première sous-piste (12, 66) ainsi qu'une troisième composante (22, 74) et une quatrième composante (24, 76) enregistrées sur la seconde sous-piste (14, 68), le transducteur (26) pouvant fonctionner simultanément pour récupérer et additionner de la piste d'asservissement (10, 64) des premières impulsions (78) et des troisièmes impulsions (80) de polarité opposée, induites respectivement par la première composante (18, 70) et la troisième composante (22, 74) enregistrées sur la piste pour fournir une première impulsion résiduelle (28 ou 78, 80), le transducteur 26 récupérant et additionnant en outre sur la piste d'asservissement (10, 64) des secondes et quatrièmes impulsions de polarité opposée induites respectivement par la seconde composante (20, 72) et la quatrième composante (24, 76) enregistrées pour donner une seconde impulsion résiduelle (30, 82), la première impulsion résiduelle (28 ou 78, 80) étant en avance par rapport à la seconde impulsion résiduelle (30, 82) d'une période prédéterminée, le décodeur (36, 40, 44, 46 ou 52, 54, 56, 60 ou 84, 40, 44, 46) se composant d'un détecteur (36, 52, 84) pour détecter la première impulsion résiduelle (28 ou 78, 80), pour commencer le fonctionnement d'un élément de temps (40, 54) afin de retarder pour la première période prédéterminée à partir de la détection de la première impulsion résiduelle (28 ou 78, 80) pour échantillonner dans (44, 46 ou dans 56, 60) l'une ou l'autre des premières (28 ou 78, 80) ou secondes (30, 82) impulsions résiduelles (30, 82), système caractérisé en ce que le retard entre la seconde impulsion résiduelle (30, 82) du premier schéma d'asservissement et la première impulsion résiduelle (28 ou 78, 80) du schéma d'asservissement suivant (18, 20, 22, 24 ou 70, 72, 74, 76) est une seconde période prédéterminée supérieure à la première période prédéterminée et le décodeur (36, 40, 44, 46 ou 51, 54, 56, 60 ou 84, 40, 44, 46) échantillonnant l'une ou l'autre de la première impulsion résiduelle (28 ou 78, 80) ou seconde impulsion résiduelle (30, 82) pour fournir un signal de sortie (48, 62) indiquant la polarité et l'amplitude de la direction et de la distance de décalage du transducteur par rapport à sa position au-dessus du milieu (15, 67) de la piste d'asservissement (10, 64) lorsque la première impulsion résiduelle (28 ou 78, 80) initialise le fonctionnement de l'élément de temps (40, 54) pour que le décodeur (36, 40, 44, 45 ou 52, 54, 56, 60 ou 84, 40 44, 46) ne fournisse aucun signal de sortie si le fonctionnement de l'élément de temps (40, 54) est initialisé par la seconde impulsion résiduelle (30, 82).

2. Système selon la revendication 1, caractérisé en ce que le décodeur (52, 54, 56, 60) se compose d'un redresseur (52) recevant (sur 50) la première impulsion résiduelle (28) et la seconde impulsion résiduelle (30) du transducteur (26) pour fournir comme signal de sortie (53) une représentation unipolaire de ces impulsions quelle que soit la polarité réelle de ces impulsions, l'élément de temps se composant d'un circuit de retard (54) branché de façon à recevoir (sur 50) des impulsions résiduelles (28, 30) du transducteur (26) et fournissant comme signal de sortie (55) une représentation retardée de la première période prédéterminée, le décodeur comportant en outre un multiplicateur (56) recevant le signal de sortie (53) du redresseur (52) et le signal de sortie (55) du circuit de retard (54) pour fournir un signal de sortie (58) représentant le produit instantané de ces signaux, le circuit de retard (54) donnant une représentation non coïncidante du signal de sortie (53) du redresseur (52) et du signal de sortie du circuit de retard (54) pour le multiplicateur (56) lorsque la première impulsion résiduelle (28) est suivie par la seconde impulsion résiduelle (30) mais ne fournit pas de signal lorsque la seconde impulsion résiduelle (30) est suivie par la première impulsion résiduelle (28) d'un schéma d'asservissement suivant (18, 20, 22, 24).

3. Système selon la revendication 1, caractérisé en ce que le décodeur (36, 40, 44, 46) se compose d'un détecteur de maximum composé (36) recevant (sur 34) des impulsions résiduelles (28, 30) du transducteur (26) et mises en oeuvre à la réception d'une impulsion résiduelle (28, 30) dépassant une amplitude prédéterminée pour fournir un signal de sortie (38) indiquant cette réception, l'élément de temps se composant d'une horloge (40) recevant le signal de sortie (38) du détecteur de maximum composé (36) et déclenchée ainsi pour démarrer une opération de décompte de temps consistant à attendre pendant une troisième période de temps prédéterminée, puis à fournir immédiatement après cela un signal de fenêtre (42) pour une quatrième période prédéterminée et le décodeur (36, 40, 44, 46) comporte en outre une porte analogique (44) recevant (sur 34) des impulsions résiduelles (28, 30) du transducteur (26) comme signal d'entrée et le signal de fenêtre (42) comme signal de commande, la porte analogique (44) étant mise en oeuvre par la réception du signal de fenêtre (42) pour fournir à sa sortie (sur 46) une représentation de son signal d'entrée (sur 34) si la première impulsion résiduelle (28) fait déclencher l'horloge (40) par le détecteur de maximum composé (36), la seconde impulsion résiduelle étant présentée comme entrée (sur 34) à la porte analogique (44) pendant la présentation du signal de fenêtre (42), la seconde période prédéterminée étant supérieure à la somme de la troisième et de la quatrième période prédéterminées, et l'horloge (40) ne pouvant être redéclenchée pendant la troisième et la quatrième période prédéterminées, et lorsque la première impulsion résiduelle (28) déclenche l'horloge (40) par le détecteur de maximum composé (36), la porte analogique (44) échantillonne la seconde impulsion résiduelle (30), mais si la seconde impulsion résiduelle commande le déclenchement de l'horloge (40) par le détecteur de maximum composé (36), la première impulsion résiduelle (28) n'est pas échantillonnée par la porte analogique (44) et l'horloge (40) n'est plus déclenchée que par chaque cas successif d'application de la première impulsion résiduelle (28) comme signal d'entrée (34) au détecteur de maximum composé (36).

4. Système selon la revendications 1, 2 ou 3, caractérisé en ce que le support mobile est un disque magnétique rotatif et le transducteur (26) est une tête magnétique de lecture/inscription.

5. Système selon la revendication 1, caractérisé en ce que la première impulsion (78) et la troisième impulsion (82) ne sont pas induites simultanément dans le transducteur (26), la première impulsion (78) et la troisième impulsion (80) étant séparées d'une cinquième période prédéterminée suffisante pour éviter la suppression réciproque partielle ou totale de ces impulsions.

6. Système selon la revendication 5, caractérisé en ce que le décodeur (84, 40, 44, 42) se compose d'un détecteur de maximum composé (84) recevant (sur 34) des impulsions (78, 80, 82) du transducteur (26) pour détecter l'une ou l'autre ou les deux des premières et les troisièmes impulsions (78 et 80) et fournissant un signal de sortie (86) correspondant, l'élément de temps se composant d'une horloge (40) recevant la sortie (86) du détecteur de maximum composé (84) et en réponse attendant une troisième période prédéterminée, puis fournissant un signal de porte (42) pour une quatrième période prédéterminée ainsi qu'une porte analogique (44) recevant (sur 34) les impulsions (78, 80, 82) du transducteur (26) pour recevoir le signal de porte (42) de l'horloge (40) comme entrée de commande et en réponse à cela (42) pour permettre le passage (de 34 à 46) de l'impulsion résiduelle (82) vers la sortie, la troisième période prédéterminée et la quatrième période prédéterminée étant telles que l'impulsion résiduelle et aucune autre ne soit autorisée à traverser la porte quelles que soient la première, la troisième ou les deux impulsions que détecte le détecteur de maximum composé.

7. Système selon les revendications 4, 5 et 6, caractérisé en ce que le support mobile est un disque magnétique, rotatif, d'enregistrement de données et le transducteur est une tête de lecture et d'inscription.

**Patentansprüche**

1. Positionserfassungssystem mit einer auf einem bewegten Medium angeordneten Servospur (10, 64), die wiederholt mehrfache Servomuster (18, 20, 22, 24 oder 70, 72, 74, 76) aufgezeichnet enthält; einem positionierbaren, mit der Servospur (10, 64) zusammenwirkenden (26) zum Abtasten von auf der Servospur aufgezeichneten Signalen (28, 30 oder 78, 80, 82) und einem die Signale (28, 30 oder 78, 80, 82) vom Wandler (26) empfangenden und die Signale (28, 30 oder 78, 80, 82) dekodierenden Dekoder (36, 40, 44, 46 oder 52, 54, 56, 60 oder 84, 40, 44, 46), dessen Ausgangssignal die Richtung und den Abstand der Abweichung des Wandlers (26) vom Zentrum (15, 67) der betreffenden Servospur (10, 64) angibt; wobei die Servospur (10, 64) erste (12, 66) und zweite (14, 68) parallele Unterspuren aufweist und jedes der Servomuster (18, 20, 22, 24 oder 70, 72, 74, 76) aus ersten (18, 70) und zweiten (20, 72) in der ersten Unterspur (12, 66) aufgezeichneten Teilen und dritten (22, 74) und vierten (24, 76) in der zweiten Unterspur (14, 68) aufgezeichneten Teilen besteht, wobei der Wandler (26) gleichzeitig erste (78) und dritte (80) von den ersten (18, 70) und dritten (22, 74) aufgezeichneten Teilen induzierte Impulse entgegengesetzter Polarität von der Servospur (10, 64) wiedergewinnt und summiert und einen ersten Differenzimpuls (28 oder 78, 80) abgibt und wobei der Wandler (26) darüber hinaus gleichzeitig zweite und vierte von den zweiten (20, 72) bzw. vierten (24, 76) aufgezeichneten Teilen induzierte Impulse entgegengesetzter Polarität von der Servospur (10, 64) wiedergewinnt und summiert und einen zweiten Differenzimpuls (30, 82) abgibt, wobei der erste Differenzimpuls (28 oder 78, 80) um eine erste vorbestimmte Periode vor dem zweiten Differenzimpuls (30, 82) auftritt und wobei der Dekoder (36, 40, 44, 46 oder 52, 54, 56, 60 oder 84, 40, 44, 46) einen Detektor (36, 52, 84) zur Erfassung des ersten Differenzimpulses (28 oder 78, 80) aufweist, um ein Zeitgeberelement (40, 54) zur Verzögerung der ersten vorbestimmten Periode von der Erfassung des ersten Differenzimpulses (28 oder 78, 80) an zu initialisieren, um einen oder den anderen der ersten (28 oder 78, 80) oder zweiten (30, 82) Differenzimpulse (30, 82) abzutasten (in 44, 46 oder in 56, 60), dadurch gekennzeichnet, daß· die Verzögerung zwischen dem zweiten Differenzimpuls (30, 82) in einem ersten Servomuster und dem ersten Differenzimpuls (28, oder 78, 80) in dem nächstfolgenden Servomuster (18, 20, 22, 24 oder 70, 72, 74, 76) um eine zweite vorbestimmte Periode größer als die erste vorbestimmte Periode ist, und daß der Dekoder (36, 40, 44, 46 oder 52, 54, 60 oder 84, 40, 44, 46) den einen oder den anderen des ersten (28 oder 78, 80) oder des zweiten (30, 82) Differenzimpulses abtastet und ein Ausgangssignal (48, 62) abgibt, dessen Polarität und Größe die Richtung und den Abstand der Abweichung des Wandlers (26) von einer Position über der Mitte (15, 67) der Servospur (10, 64) angibt, wenn der erste Differenzimpuls (28 oder 78, 80) das Zeitgeberelement (40, 54) initialisiert, und daß der Dekoder (36, 40, 44, 46 oder 52, 54, 56, 60 oder 84, 40, 44, 46) kein Ausgangssignal abgibt, wenn das Zeitgeberelement (40, 54) durch den zweiten Differenzimpuls (30, 82) initialisiert wurde.

2. Positionserfassungssystem nach Anspruch 1, dadurch gekennzeichnet, daß der Dekoder (52, 54, 56, 60) einen Gleichrichter (52) enthält, der den ersten (28) und zweiten (30) Differenzimpuls vom Wandler (26) empfängt (auf 50) und als Ausgangssignal (53) eine unipolaren Impuls unabhängig von der tatsächlichen Polarität abgibt, daß das Zeitgeberelement eine Verzögerungsschaltung (54) enthält, die die Differenzimpulse (28, 30) von dem Wandler (26) empfängt (auf 50) und als Ausgangssignal (55) die Differenzimpulse verzögert um die erste vorbestimmte Periode abgibt und daß der Dekoder darüber hinaus einen Multiplikator (56) enthält, der das Ausgangssignal (53) des Gleichrichters (52) und das Ausgangssignal (55) der Verzögerungsschaltung (54) empfängt und ein Ausgangssignal (58) abgibt, das dem augenblicklichen Produkt beider Ausgangssignale entspricht, wobei die Verzögerungsschaltung (54) eine gleichzeitige Abgabe Ausgangssignals (52) des Gleichrichters (52) und des Ausgangssignals der Verzögerungsschaltung (54) an den Multiplikator (56) bewirkt, wenn dem ersten Differenzimpuls (28) der zweite Differenzimpuls (30) folgt, jedoch keine gleichzeitige Abgabe beider Ausgangssignale bewirkt, wenn dem zweiten Differenzimpuls (30) der erste Differenzimpuls (28) eines nachfolgenden Servomusters (18, 20, 22, 24) folgt.

3. Positionserfassungssystem nach Anspruch 1, dadurch gekennzeichnet, daß der Dekoder (36, 40, 44, 46) einen kombinierten Spitzendetektor (36) enthält, der Differenzimpulse (28, 30) vom Wandler (26) empfängt (auf 34) und auf den Empfang eines Differenzimpulses (28, 30) oberhalb einer vorbestimmten Amplitude ein Ausgangssignal (38) abgibt, das den Empfang eines Differenzimpulses anzeigt; daß das Zeitgeberelement einen Zeitgeber (40) enthält, der das Ausgangssignal (38) des kombinierten Spitzendetektors (36) empfängt und durch das Ausgangssignal getriggert wird, um eine Zeitgeberoperation zu starten, die aus einer Wartezeit von einer dritten vorbestimmten Periode besteht und unmittelbar danach ein Fenstersignal (42) für eine vierte vorbestimmte Periode abgibt, daß der Dekoder (36, 40, 44, 46) zusätzlich ein Analoggatter (44) enthält, das Differenzimpulse (28, 30) vom Wandler (26) als Eingangssignal (auf 34) und das Fenstersignal (42) als Steuer-Eingangssignal empfängt, daß das Analoggatter (44) auf den Empfang des Fenstersignals (42) als Ausgangssignal (auf 46) sein Eingangssignal (auf 34) abgibt, wenn, falls der erste Differenzimpuls (28) den kombinierten Spitzendetektor (36) veranlaßt, den Zeitgeber (40) zu triggern, der zweite Differenzimpuls als Eingangssignal (auf 34) an das Analoggatter (44) während der Abgabe des Fenstersignals (42) abgegeben wird, wenn die zweite vorbestimmte Periode größer als die Summe der dritten und vierten vorbestimmten Perioden ist und wenn der Zeitgeber (40) nicht mehr während der dritten und vierten vorbestimmten Perioden rücktriggerbar ist; wobei, falls der erste Differenzimpuls (28) den kombinierten Spitzendetektor (36) veranlaßt, den Zeitgeber (40) zu triggern, das Aanaloggatter (44) den zweiten Differenzimpuls (30) abtastet, daß jedoch, falls der zweite Differenzimpuls den kombinierten Spitzendetektor (36) veranlaßt, den Zeitgeber (40) zu triggern, der erste Differenzimpuls (28) nicht durch das Analoggatter (44) abgetastet wird und daß der Zeitgeber (40) danach nur mit jedem sukzessiven Auftreten des ersten Differenzimpulses (28) als Eingangssignal (34) des kombinierten Spitzendetektors (36) getriggert wird.

4. Positionserfassungssystem nach Anspruch 1, 2 oder 3, dadurch gekennzeichnet, daß das bewegte Medium aus einer rotierenden Magnetplatte und der Wandler (26) aus einem magnetischen Lese/Schreibkopf besteht.

5. Positionserfassungssystem nach Anspruch 1, dadurch gekennzeichnet, daß die ersten (78) und dritten (80) Impulse nicht gleichzeitig im Wandler (26) induziert werden, sondern daß die ersten (78) und dritten (80) Impulse durch eine fünfte vorbestimmte Periode voneinander getrennt werden, die ausreichend ist, eine gegenseitige vollständige oder teilweise Auslöschung der Impulse zu verhindern.

6. Positionserfassungssystem nach Anspruch 5, dadurch gekennzeichnet, daß der Dekoder (84, 40, 44, 42) einen kombinierten Spitzendetektor (84) enthält, der die Impulse (78, 80, 82) vom Wandler (26) empfängt (auf 34) und den einen, den anderen oder beide erste (78) und dritte (80) Impulse (78, 80) erfaßt und ein Ausgangssignal (86) abgibt, das dies anzeigt, daß das Zeitgeberelement einen Zeitgeber (40) enthält, der das Ausgangssignal (86) des kombinierten Spitzendetektors (84) empfängt und darauf eine dritte vorbestimmte Periode abwartet und anschließend ein Gattersignal (42) für eine vierte vorbestimmte Periode abgibt und daß ein Analoggatter (44) die Impulse (78, 80, 82) vom Wandler (26) (auf 34) und das Gattersignal (42) vom Zeitgeber (40) als Steuereingang empfängt und auf den Empfang des Gattersignals (42) den Durchgang (von 34 nach 46) des Differenzimpulses (82) zu einem Ausgang gestattet, wobei die dritte und vierte vorbestimmte Periode so bemessen sind, daß der Differenzimpuls und kein anderer Impuls durch das Gatter gelangen kann, unabhängig davon, ob der kombinierte Spitzendetektor den ersten, den dritten oder beide Impulse erfaßt.

7. Positionserfassungssystem nach Anspruch 4, 5 oder 6, dadurch gekennzeichnet, daß das bewegte Medium aus einer rotierenden magnetischen Datenspeicherplatte und der Wandler aus einem Lese/Schreibkopf besteht.

# FIG.I

N | S | N | S | N | S | N
S | N | S | N | S | N | S

# FIG.2A

N | S | N | S | N | | S | N
S | N | S | N | S | | N | S

# FIG.2B

N | S | N | S | N | | S | N
S | N | S | N | S | | N | S

# FIG.2C

N | S | N | S | N | | S | N
S | N | S | N | S | | N | S

FIG.3A

FIG.3B

FIG.3C

FIG.4

FIG.5

FIG.8

FIG.6

FIG.7